# FASCICULE DE BREVET EUROPEEN

(11) **EP 0 886 902 B1**
(45) Date de publication et mention de la délivrance du brevet: **15.12.1999**
(21) Numéro de dépôt: 96910156.7
(22) Date de dépôt: 06.05.1996
(51) Int. Cl.: H02G 3/04

(54) **GAINE ANNELEE FENDUE A PROTECTION PHONIQUE**
LÄNGSGESCHLITZTES WELLROHR MIT SCHALLISOLIERUNG
SPLIT CORRUGATED SHEATH WITH A SOUND-PROOFING FUNCTION

(30) Priorité: 11.03.1996 FR 9603243
(43) Date de publication de la demande: 30.12.1998
(73) Titulaire: SOFANOU S.A., 25340 Clerval (FR)
(72) Inventeur: STREIT, Bernard, F-25340 Anteuil (FR)
(74) Mandataire: Moinas, Michel
(86) Numéro de dépôt international: IB9600404
(87) Numéro de publication internationale: WO9734351

(56) Documents cités:
- EP-A- 0 556 140
- DE-U- 1 730 695
- US-A- 3 254 678
- US-A- 4 970 351

## Description

La présente invention est relative à une gaine tubulaire souple annelée, et plus particulièrement à une gaine utilisée pour la protection et le positionnement de faisceaux de fils et câbles électriques.

Les gaines tubulaires annelées, c'est-à-dire celles dont la forme ressemble à une succession d'anneaux reliés les uns aux autres, sont usuellement réalisées en matière plastique, telle que le polypropylène extrudé. Ces gaines permettent la réalisation de réseaux de protection complexes pour des faisceaux de fils ou câbles électriques au sein de navires, avions ou véhicules automobiles, et dans ce dernier cas notamment dans le compartiment moteur. En effet, compte-tenu du faible espace disponible, ces gaines ou tuyaux doivent pouvoir suivre de très près les parois non rectilignes et contourner les différents organes rencontrés. Avec de telles gaines annelées, on peut justement réaliser des courbes dont le rayon de courbure est inférieur à trois fois leur diamètre sans que celles-ci ne se déforment vers l'intérieur ou même se cassent.

Un mode de réalisation de telles gaines consiste à extruder un tube de plastique, et à le plaquer tout de suite en sortie contre les faces internes crénelées d'une double série de coquilles situées en vis-à-vis et progressant avec l'avance du tube au niveau d'une machine dite "mouleuse". On peut ainsi réaliser en continu de grandes longueurs de gaines qui sont par la suite stockées sur des tambours de transport. De tels modes de réalisation sont décrits plus en détail par exemple dans les documents FR 2 171 844, GB 1 250 639 et GB 1 311 205.

Lors de la mise en oeuvre de ces gaines dans un véhicule, on est confronté au problème de l'introduction d'un toron de fils à l'intérieur des tronçons de gaines. Pour un tronçon de gaine rectiligne de l'ordre du mètre, on peut introduire puis pousser les câbles simplement par l'une de ses extrémités. Cette opération devient rapidement plus laborieuse pour des tronçons de longueurs supérieures, ou pour des tronçons préinstallés avec plusieurs courbures.

A ce titre, on connaît, par exemple des documents FR 2 264 649 ou DE 24 13 879, des gaines à double paroi : une externe annelée pour la flexibilité, et une interne lisse pour une introduction aisée des câbles. On connaît également, par exemple des documents EP 0 055 980, DE-U-9103665 ou CA 1 302 310, des tubes annelés fabriqués avec un fil interne d'origine, dits "tire-fils", pour la traction ultérieure de câbles. Toutefois, ces gaines requièrent un surplus de matière, et nécessitent des aménagements coûteux des installations de fabrication.

Plus communément, on propose, dans la gamme des gaines annelées de protection, des gaines fendues, c'est-à-dire celles qui ont été coupées selon une ligne droite longitudinale en fin de procédé de réalisation. De telles gaines sont connues des documents US 3 711 633, US 4 384 167, ou DE 44 00 695. On peut alors aisément introduire ultérieurement en n'importe quelle zone de la gaine des fils et câbles électriques directement au travers de cette fente qui, normalement, se referme grâce à la rigidité transversale donnée par les cannelures. De telles gaines restent peu coûteuses.

Par ailleurs, l'évolution actuelle dans la technique automobile, notamment dans le domaine des accessoires électriques tels que feux de signalisation, haut-parleurs, essuie-glaces de lunettes arrières etc..., ainsi que dans celui du contrôle électronique permanent de nombreux paramètres résultant en des commandes automatiques, fait que de plus en plus de câbles électriques transitent dans différents éléments de carrosserie : portes, plafonniers, pour arriver entre autres dans le tableau de bord. De plus, un effort particulier est actuellement effectué pour améliorer l'insonorisation de l'habitacle, et ceci par une recherche et élimination systématique de toutes les sources de bruit potentielles. Or, il a été constaté que la vibration des faisceaux de câbles à l'intérieur des gaines, ou des gaines contre les éléments de paroi pouvait engendrer des nuisances auditives.

A ce titre, il est connu d'enfermer une gaine plastique de protection de câbles à l'intérieur d'un tube fendu en matériau souple épais que l'on fixe à intervalles réguliers au moyen de bandes adhésives transversales. En alternative, le document japonais JP 57 085 874 divulgue une bande adhésive complétée de matière fibreuse et directement utilisée pour serrer transversalement des câbles entre eux. Comme on peut aisément le comprendre, l'utilisation de ces bandes adhésives transversales s'avère fastidieuse lors de l'installation de réseaux câblés et, dans le dernier cas, n'apporte qu'une protection phonique limitée.

On connaît également du document US 4 970 351 une gaine plastique annelée fendue co-extrudée, ou pulvérisée, d'une couche épaisse de mousse d'isolation phonique. Toutefois, l'application directe de ces techniques de co-extrusion ou de pulvérisation aux mousses alvéolaires antibruit est particulièrement compliquée pour être économiquement rentable, et ne permet en outre que de traiter la face externe.

Dans le document EP 0 556 140 de la demanderesse, il est proposé une gaine annelée enrobée dans une bande en matériau d'isolant phonique, notamment dans une bande de feutre collée et rabattue longitudinalement. Dans le cas d'une gaine annelée fendue, les parties latérales de la bande de feutrine peuvent alors être également insérées longitudinalement à l'intérieur de la gaine au travers de la fente créant ainsi une isolation phonique à la fois contre sa surface externe et sa surface interne.

L'avantage de ce procédé d'enrobage antibruit efficace est qu'il peut être réalisé, à la demande et de manière économique, par une opération de reprise ultérieure sur des gaines d'abord réalisées de manière standard, et ceci avec un outillage relativement simple. Surtout, le second mode d'enrobage permet de respecter la fente pour conserver la facilité d'insertion des câbles tout en assurant simultanément une double protection phonique.

Satisfaisante dans la majorité des circonstances, on constate toutefois que ces gaines fendues à isolation phonique peuvent laisser échapper les fils en des zones de fort rayon de courbure où la fente tend à se rouvrir malgré la résistance élastique des cannelures.

Le but de la présente invention est une gaine annelée de protection thermique et mécanique de câbles électriques complétée d'une couche externe de matériau de protection phonique, et plus particulièrement une gaine dont la fente longitudinale d'introduction des câbles reste intégralement fermée après son installation. De préférence, cette fermeture doit rester fiable ultérieurement quelle que soit la forme du parcours imposé à la gaine, et ceci malgré la présence d'éventuelles vibrations. Une telle gaine doit également rester peu coûteuse à réaliser.

Ces buts sont réalisés dans une gaine annelée fendue antibruit du fait qu'elle comprend en outre une bande longitudinale continue en matériau de protection phonique dont une partie de la largeur est fixée le long de l'un des bords de la fente contre la couche externe de matériau de protection phonique, et dont l'autre partie est susceptible d'être fixée ultérieurement, par exemple lors de l'installation de la gaine, le long de l'autre bord de la fente.

En levant la bande, on accède toujours aisément à la fente pour insertion d'un câble ou d'un toron. Une fois l'ensemble du faisceau installé, on rabat simplement la bande pour fixer sa seconde partie, et ceci progressivement tout le long de l'autre bord de la fente pour la fermer. A l'inverse d'une pluralité de bandes adhésives transversales, cette bande ou rabat longitudinal ferme complètement la fente, et ceci par un mouvement facile continu, donc rapide pour l'opérateur.

Si la gaine est ensuite amenée à décrire une courbure à rayon très sévère, notamment avec la fente sur le côté provoquant usuellement dans ce cas un léger écartement des bords, alors, de par sa résistance intrinsèque, la bande maintient la fente obturée à ce niveau, quel qu'en soit son emplacement. De plus, la bande étant elle-même en un matériau de protection phonique, on maintient une prévention efficace contre les risques de bruit indésiré.

Il convient de noter que ce mode de fermeture reste parfaitement compatible avec une gaine dont la protection phonique est basée sur une large bande de matériau de protection phonique enrobée et collée longitudinalement dont les côtés latéraux sont de plus insérés dans la fente pour assurer une double protection phonique interne et externe.

La bande peut être fixée sur la couche externe par des moyens de fixation temporaire, tels que, par exemple, des bandes à crochets commercialisées sous la dénomination Velcro.

De préférence, la première partie de largeur de la bande est collée de manière permanente le long de l'un des bords de la fente de la couche externe, et l'autre partie présente un encollage recouvert par une bande détachable de couverture.

Dans la pratique, ce dispositif de fixation basé sur une bande préencollée s'avère moins onéreux à réaliser, toujours facile à manipuler et finalement plus fiable dans le temps.

De préférence alors, le matériau constituant la bande est le même que le matériau de la couche externe de protection phonique de la gaine, ce qui élargit et facilite le choix de la colle.

Selon un mode de réalisation préféré, la largeur de la bande représente entre 10 et 50 % de la périphérie externe de la gaine, est divisée en deux parties sensiblement égales, et son épaisseur est sensiblement égale à celle de la couche de matériau de protection phonique.

Cette largeur de bande permet de définir deux moitiés suffisantes pour que chacun des collages soit effectivement résistant à la traction, soit lors de la manipulation de la gaine lors de sa mise en place, soit lors d'un écartement des bords. Cette épaisseur constitue, par ailleurs, un bon compromis entre une solidité suffisante de la bande sous traction lors d'un écartement de bords de fente en cas de courbure sévère, et une proéminence aussi petite que possible pour minimiser les risques d'accrochement à une aspérité de la paroi.

Utilement, la première partie de la largeur de la bande longitudinale est fixée légèrement en retrait transversal par rapport au bord correspondant de la fente. Ainsi, lorsque la bande de protection phonique est relevée pour insertion des câbles, cette fente est plus apparente, donc mieux accessible.

Un matériau particulièrement bien adapté pour la mise en oeuvre de l'invention est le feutre, c'est-à-dire un matériau obtenu en agglutinant des poils ou des fils naturels ou artificiels. Un matériau particulièrement apprécié est une bande de feutrine en polyester, en polypropylène, en viscose ou en acrylique. Cette bande de feutrine peut également être basée sur des fils naturels tels que le chanvre, le lin ou des poils animais. Alors, la colle est de préférence de la famille des thermofusibles, également appelés "hot melt" à base de polymère de type EVA (Ethylène-Vinyle-Acétate). La bande détachable de couverture est de préférence un papier siliconé.

La particularité de cette colle est qu'elle s'accroche plus à la feutrine qu'au papier, faisant que ce dernier peut être pelé facilement. De plus ce type de colle assure un maintien particulièrement fort pour de la feutrine contre feutrine, sans durcir au point de risquer une transmission phonique.

Un mode de réalisation avantageux d'une gaine selon l'invention consiste à :
- déposer deux couches de colle parallèles sur une bande de couverture,
- couper en deux parties la bande de couverture longitudinalement entre les deux couches de colle,
- amener puis appliquer la bande de couverture sur une bande de matériau de protection phonique, la colle devenant principalement solidaire de la bande de protection phonique,
- amener la bande de matériau proche d'une gaine enrobée dans un matériau de protection phonique et dont la fente d'insertion de câbles est guidée, et peler la première partie de la bande de couverture pour dégager une première partie de bande de protection phonique, et
- appliquer la première partie de la bande de protection phonique contre l'un des bords de la fente de la gaine, l'autre partie de la bande de protection phonique restant libre avec sa bande de couverture.

Une installation pour la mise en oeuvre du procédé comprend avantageusement :
- un dispositif encolleur déposant deux couches de colle parallèles sur une bande de couverture issue d'un premier tambour,
- un couteau de refente coupant en deux parties la bande de couverture longitudinalement entre les deux couches de colle,
- un dispositif à rouleaux et galets de guidage pour amener puis appliquer la bande de couverture sur une bande de matériau de protection phonique issue d'un second tambour,
- un dispositif à rouleaux et galets de guidage pour amener la bande de protection phonique proche d'une gaine enrobée dans un matériau de protection phonique issue d'un troisième tambour, un dispositif à disque pénétrant dans la fente d'insertion de câbles pour la guider, et un dispositif à galets de guidage et tambour de réception pour peler la première partie de la bande de couverture et dégager une première partie de bande de protection phonique,
- un dispositif à rouleaux et galets de guidage pour appliquer la première partie de la bande de protection phonique contre l'un des bords de la fente de la gaine, l'autre partie de la bande de protection phonique restant libre avec sa bande de couverture, et
- un dispositif de traction entraînant en sortie la gaine garnie de sa bande de protection phonique, et par la même entraînant en amont la bande de couverture, la bande de matériau et la gaine hors de leurs tambours respectifs.

Avantageusement, l'installation pour la mise en oeuvre du procédé comprend en outre un dispositif de régulation de tension à une valeur prédéterminée en sortie des premier et second tambours.

Ce procédé et dispositif de mise en oeuvre font principalement appel à des rouleaux et galets de guidage pour établir un parcours au sein duquel on peut contrôler avec précision la tension de chacune des bandes et de la gaine. De préférence, on se base sur une tension de gaine presque nulle, pour, dans le cas de gaine annelée, éviter tout risque d'élongation induisant par la suite des froncements, les tensions des bandes de matériau de protection phonique et de couverture étant adaptées à cette référence de base.

L'invention sera mieux comprise à l'étude d'un mode de réalisation pris à titre nullement limitatif et illustré dans les figures annexées dans lesquelles :
- la figure 1 est une vue schématique d'une installation prévue pour la réalisation d'une gaine de protection mécanique, thermique et phonique selon l'invention,
- la figure 2 est une vue en perspective schématique d'une portion de gaine issue de l'installation de la figure 1, et
- la figure 3 est une vue en coupe du détail de la gaine au niveau de la fente.

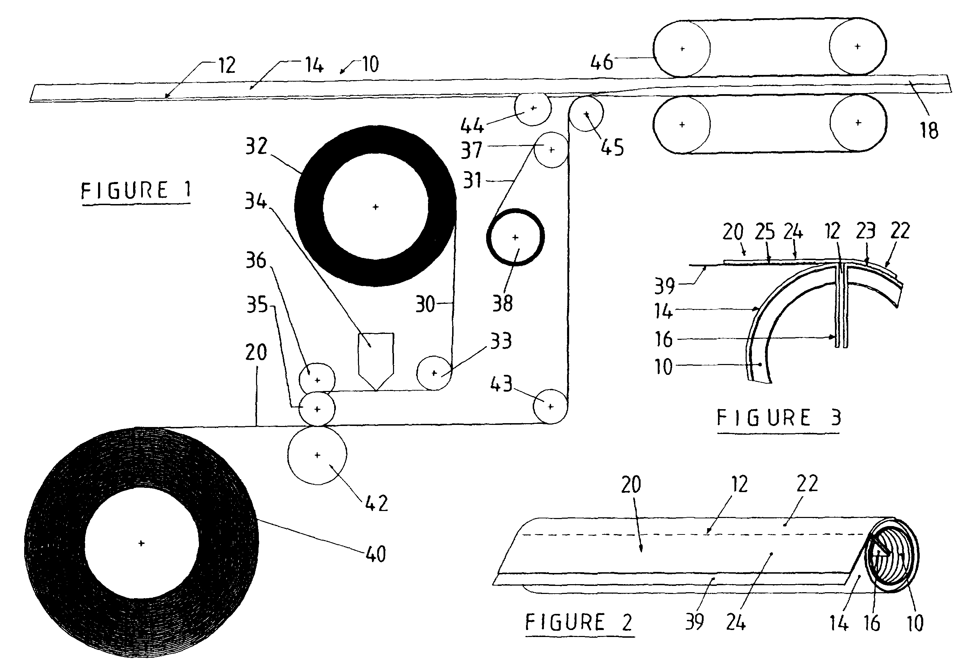

Sur la figure 1 est illustrée une installation permettant de retravailler une gaine annelée 10 de protection de faisceaux de câbles comprenant un enrobage externe 14 de matériau de protection phonique ainsi qu'une fente longitudinale 12 d'introduction de câbles. Le mode de fabrication de ce type de gaine 10 est, par exemple, décrit dans le document US 4 970 351 ou EP 0 556 140 dont les contenus sont inclus dans cette description en vertu de cette citation. Plus particulièrement, ce dernier document décrit un procédé d'enrobage d'une gaine annelée plastique 10 avec une large bande de feutrine collée puis rabattue longitudinalement, et dont les deux côtés latéraux sont finalement insérés à l'intérieur de la gaine au travers de la fente pour former ainsi une double protection phonique interne et externe.

L'installation de la figure 1 peut être montée soit directement en aval d'une installation de fabrication de gaine ; soit constituer une installation entièrement indépendante, la gaine 10 étant alors alimentée à partir d'un tambour de stockage et de manipulation. La figure 1 étant une vue schématique, on comprend aisément que cette installation peut être déployée dans un plan horizontal ou vertical passant par la gaine 10, l'installation pouvant, dans ce dernier cas, être agencée soit au-dessus ou en dessous de la gaine.

Dans cette installation, la gaine 10 est entraînée par un dispositif aval de traction 46 comprenant une paire de courroies sans fin adjacentes dont les deux portions de courroies en vis-à-vis serrent la gaine, ces deux portions étant entraînées dans le même sens d'avancement par leurs poulies de renvoi d'extrémités motorisées. Cette gaine est guidée dans son parcours par une pluralité de moyens de guidage, tels que des galets, tambours ou plots non représentés. De plus, un disque 44 engagé dans la fente 12 maintient la gaine selon une orientation très précise, par exemple avec la fente orientée vers le haut pour une installation agencée dans un plan vertical au-dessus de la gaine.

Par ailleurs, cette installation comprend d'une part un tambour d'alimentation 40 d'une bande de matériau phonique 20, de préférence une bande de feutrine de qualité technique, par exemple en acrylique, lorsqu'elle est destinée à venir en relation avec une gaine réalisée selon le procédé décrit dans le document EP 0 556 140. La bande 20 de feutrine dévidée passe par des premiers galets de support et de guidage 42 et 43.

Cette installation comprend d'autre part un tambour d'alimentation 32 d'une bande de couverture 30 qui, dans le cas d'une bande 20 de feutrine, est un papier siliconé. La largeur de cette bande de couverture est de 10 à 20 % plus grande que celle de la bande de feutrine.

En sortie de son tambour d'alimentation 32, cette bande de couverture est guidée par deux galets 33 et 36 devant une station d'encollage 34 déposant deux bandes de colle parallèles séparées par un espace de l'ordre de 5 à 10 % de la largeur de la bande. Latéralement, ces bandes de colle s'arrêtent avant les bords du papier, la largeur totale de l'encollage, y compris de la bande centrale, étant sensiblement égale à la largeur de la bande de feutrine 20.

Immédiatement après la station d'encollage 34, par exemple au niveau du galet 35, cette bande de couverture 30 est coupée longitudinalement entre les deux encollages par un couteau ou un disque-lame de refente 36.

Comme illustré sur la figure 1, cette bande de couverture 30 effectue ensuite un demi-tour autour du galet 35 pour être appliquée contre la bande de feutrine 20, la pression d'application étant assurée par ce galet 35 de renvoi et le galet 42 de support formant ensemble une calandre. La composition de la colle est établie en fonction de la composition de la feutrine de telle sorte qu'elle soit, après cette application ferme, plus adhérente à la feutrine qu'à la bande de couverture 30.

La bande de feutrine 20 ainsi encollée et protégée par la bande de couverture 30 peut alors être dirigée par des galets 43 et 45 vers la gaine 10. Peu avant le galet 45, un galet-peleur 37 dévie une première moitié 31 longitudinale de la bande de papier de couverture 30, et la dirige vers un tambour de réception 38. Ceci a pour effet de mettre à nu une première moitié longitudinale correspondante de la bande de feutrine 20 pratiquement entièrement encollée hormis une zone centrale.

Cette première moitié est alors immédiatement appliquée par le galet 45 contre l'un des bords de la fente 12 de la gaine, l'autre moitié ayant conservé sa bande de couverture restant libre. Ainsi appliquée, la bande de feutrine 20 passe avec la gaine 10, dans le dispositif 46 d'entraînement par traction à l'intérieur duquel est confirmé le collage de sa première moitié longitudinale formant ainsi une languette de fermeture ultérieure. La gaine finale 18 avec cette languette 24 de feutrine est ensuite orientée vers un tambour de réception et de stockage non illustré.

Une difficulté non négligeable dans cet assemblage d'une bande complémentaire de feutrine contre la gaine vient du fait que cette bande 20, cette gaine 10 et le papier de couverture 30 présentent chacun des modules de traction sensiblement différents, faisant que l'on risque fortement d'obtenir en sortie une gaine 18 présentant des froncements inacceptables. Après de nombreux essais en atelier, il s'est avéré que l'on peut résoudre ce problème en tirant la gaine 10 par le dispositif 46 sous très faible tension, et en prévoyant un dispositif de régulation de la tension de la bande de feutrine 20 à une valeur prédéterminée assez faible en sortie du tambour 40. Bien que la bande de papier de couverture 30 ne soit guère extensible, on prévoit également, si désiré, un dispositif de légère mise sous tension pour éviter tout flottement nuisible.

Grâce à cette installation, on obtient ainsi une gaine annelée à protection phonique telle qu'illustrée sur les figures 2 et 3, dans lesquelles des mêmes références désignent des parties identiques. Sur ces figures, on reconnaît au centre la gaine tubulaire annelée plastique de base 10 avec sa fente 12. Cette gaine est garnie d'un enrobage 14 en matériau d'isolation phonique tel qu'une large bande de feutrine collée et rabattue longitudinalement. Notamment, les bords latéraux de cette bande ont été insérés au travers de la fente à l'intérieur de la gaine pour former deux rideaux 16, normalement plus longs qu'illustrés, formant une isolation phonique interne.

Plus particulièrement selon l'invention, la bande complémentaire de feutrine 20 comprend une première partie, en l'occurrence une première moitié, longitudinale 22 dont toute la surface est fixée au bord droit de la fente 12 par une couche 23 de colle. Tel qu'illustré, cette couche de colle 23 s'arrête au niveau de la fente 12, elle pourrait en fait s'arrêter quelques millimètres avant mais, en tous les cas, elle ne déborde surtout pas par-dessus cette fente 12 pour en préserver son ouverture libre.

La seconde moitié libre 24 de la bande 20 formant une languette ou rabat présente sur toute sa surface un encollage 25 protégé par une bande 39 de papier de couverture qui, pour des questions de commodité, dépasse latéralement hors de la bande 20.

La bande complémentaire 20 peut être composée de feutrine à base de fibre naturelle telle que le chanvre, le lin ou le poil de lapin, mais de préférence est de qualité technique c'est-à-dire à base de fil de polyester, polypropylène, viscose ou acrylique.

Dans le cas du collage d'une bande de feutrine 20 sur un enrobage 14 également en feutrine, l'épaisseur de cette bande rapportée doit être juste suffisante pour tenir la force maximum probable de traction d'ouverture de la fente. Dans la pratique, une épaisseur de bande de feutrine 20 rapportée comprise entre un tiers et la valeur de l'épaisseur de l'enrobage 14 s'avère suffisante. La largeur de la bande dépend en partie de la force d'accrochage de la colle : une plus faible largeur étant suffisante pour une colle forte. Cette largeur peut être comprise entre 10 et 50 % de la périphérie externe de la gaine. Par ailleurs, une bande suffisamment large facilite son guidage dans l'installation, puis, ultérieurement, la manipulation de la seconde partie libre par l'opérateur.

La colle préférée est de type thermofusible (hot melt) composée d'un polymère de base, d'une cire, d'une résine tackifiante (qui améliore l'adhérence) et d'additifs. Le polymère de base le plus utilisé est l'EVA (Etylène-Vinyle-Acétate).

Lors de la mise en oeuvre d'une telle gaine selon l'invention, l'utilisateur soulève la languette libre 24 de la bande 20, voire la rabat complètement contre la première partie fixe 22, pour accéder à la fente 12. Il peut alors insérer et installer de manière conventionnelle un toron de câbles à l'intérieur de la gaine en le passant au travers de cette fente. Après s'être assuré que la totalité des câbles nécessaires est installée, l'opérateur retire manuellement la bande de couverture 39 et applique la seconde partie libre 24 contre l'autre bord de la fente 12 qu'il ferme ainsi définitivement. Cette opération peut être effectuée de proche en proche, par exemple par étape de 50 cm, d'un bout à l'autre de la gaine. Si cette gaine subit par la suite des contraintes mécaniques, notamment si elle doit parcourir des courbes très sévères, la bande maintient la fente 12 fermée quel que soit l'emplacement de cette contrainte. Surtout, ce mode de verrouillage de la fente n'altère nullement l'isolation phonique.

L'invention n'est pas strictement limitée au mode de réalisation décrit précédemment, et de nombreuses améliorations peuvent être apportées dans le cadre des revendications. Notamment, le matériau composant la bande rapportée 20 ne doit pas nécessairement être identique à celui de l'enrobage, pour autant qu'il présente des qualités d'isolation phonique et une tenue suffisante pour supporter des tractions longitudinales et transversales. Par ailleurs, en lieu et place de la première surface de colle 23, on peut envisager un dispositif de soudure par ultrasons, certes un peu plus délicat à mettre en oeuvre. A l'inverse, les surfaces de colle 23 et 24 peuvent être remplacées par des moyens de fixation temporaire tels que celui commercialisé sous la dénomination Velcro. La bande rapportée 20 peut être également appliquée à des gaines 10 fendues non annelées et/ou ne comprenant qu'une couche d'isolation externe.

## Revendications

1. Gaine (10) annelée de protection thermique et mécanique de câbles électriques complétée d'une couche externe (14) de matériau de protection phonique et présentant une fente d'introduction (12) de câbles, caractérisée en ce qu'elle comprend une bande longitudinale (20) continue en matériau de protection phonique dont une partie de la largeur (22) est fixée le long de l'un des bords de la fente contre la couche externe de matériau de protection phonique, et dont l'autre partie (24) est susceptible d'être fixée ultérieurement le long de l'autre bord de la fente.

2. Gaine selon la revendication 1, caractérisée en ce que la première partie de largeur (22) de la bande de protection phonique (20) est collée (23) de manière permanente le long de l'un des bords de la fente (12) de la couche externe (14), et l'autre partie (24) présente un encollage (25) recouvert par une bande détachable de couverture (30).

3. Gaine selon la revendication 1 ou 2, caractérisée en ce que le matériau constituant la bande de protection phonique (20) est le même que le matériau de la couche externe (14) de la gaine.

4. Gaine selon la revendication 1, 2 ou 3, caractérisée en ce que la largeur de la bande de protection phonique (20) représente entre 10 et 50 % de la périphérie interne de la gaine (10), est divisée en deux parties (22,24) égales, et en ce que son épaisseur est au plus égale à celle de la couche (14) de matériau de protection phonique.

5. Gaine selon l'une des revendications précédentes, caractérisée en ce que la première partie (22) de la largeur de la bande de protection phonique (20) est fixée légèrement en retrait transversal par rapport au bord correspondant de la fente (12).

6. Gaine selon l'une des revendications précédentes, caractérisée en ce que la bande de protection phonique (20) est en feutre, en ce que la colle (23,25) est du type thermofusible, et en ce que la bande détachable de couverture (30) est un papier siliconé.

7. Procédé de réalisation d'une gaine selon l'une des revendications 1 à 6, caractérisé en ce qu'il consiste à :
- déposer deux couches de colle (23,25) parallèles sur une bande de couverture (30),
- couper en deux parties la bande de couverture (30) longitudinalement entre les deux couches de colle,
- amener puis appliquer la bande de couverture (30) sur une bande (20) de matériau de protection phonique, la colle devenant principalement solidaire de la bande de protection phonique,
- amener la bande de protection phonique (20) proche d'une gaine (10) enrobée dans un matériau (14) de protection phonique et dont la fente d'insertion (12) de câbles est guidée, et peler la première partie de la bande de couverture pour dégager une première partie de bande de protection phonique (20), et
- appliquer la première partie (22) de la bande de protection phonique contre l'un des bords de la fente (12) de la gaine (10), l'autre partie (24) de la bande de protection phonique restant libre avec sa bande de couverture (30).

8. Installation spécialement conçue pour la mise en oeuvre du procédé selon la revendication 7, caractérisée en ce qu'elle comprend :
- un dispositif encolleur (34) déposant deux couches de colle (23,24) parallèles sur une bande de couverture (30) issue d'un premier tambour (32),
- un couteau de refente (36) coupant en deux parties la bande de couverture (30) longitudinalement entre les deux couches de colle,
- un dispositif à rouleaux et galets de guidage (35) pour amener puis appliquer la bande de couverture (30) sur une bande de matériau (20) de protection phonique issue d'un second tambour (40),
- un dispositif à rouleaux et galets (43,45) de guidage pour amener la bande de protection phonique (20) proche d'une gaine (10) enrobée dans un matériau (14) de protection phonique issue d'un troisième tambour, un dispositif à disque (44) pénétrant dans la fente d'insertion (12) de câbles pour la guider, et un dispositif à galets de guidage (37) et tambour de réception (38) pour peler la première partie de la bande de couverture (30) et dégager une première partie (22) de bande de protection phonique (20),
- un dispositif à rouleaux et galets (45) de guidage pour appliquer la première partie (22) de la bande de protection phonique contre l'un des bords de la fente (12) de la gaine (10), l'autre partie (24) de la bande de protection phonique restant libre avec sa bande de couverture (30), et
- un dispositif de traction (46) entraînant en sortie la gaine (18) garnie de sa bande de protection phonique (20), et par la même entraînant en amont, la bande de couverture (30), la bande de protection phonique (20) et la gaine (10) hors de leurs tambours (32,40) respectifs.

9. Installation selon la revendication 8, caractérisée en ce qu'elle comprend un dispositif de régulation de tension à une valeur prédéterminée en sortie du premier (32) et second tambour (40).

## Patentansprüche

1. Wellrohr (10) für Wärme- und mechanischen Schutz von elektrischen Kabeln, vervollständigt durch eine äussere Schicht (14) aus schallisolierendem Material und einen Schlitz (12) für die Einführung von Kabeln aufweisend, dadurch gekennzeichnet, dass es einen durchgehenden Längsstreifen (20) aus schallisolierendem Material aufweist, der mit einem Teil seiner Breite (22) entlang einer der Kanten des Schlitzes an der äusseren Schicht aus schallisolierendem Material befestigt ist und dessen übriger Teil (24) dafür geeignet ist, späterhin entlang der anderen Kante des Schlitzes befestigt zu werden.

2. Rohr nach Anspruch 1, dadurch gekennzeichnet, dass der erste Teil der Breite (22) des schallisolierenden Streifens (20) permanent entlang einer der Kanten des Schlitzes (12) an der äusseren Schicht (14) angeklebt (23) ist und der übrige Teil (24) eine Gummierung (25) aufweist, die von einem abziehbaren Abdeckstreifen (30) überdeckt ist.

3. Rohr nach Anspruch 1 oder 2, dadurch gekennzeichnet, dass das Material des schallisolierenden Streifens (20) das gleiche wie das Material der äusseren Schicht (14) des Rohres ist.

4. Rohr nach Anspruch 1, 2 oder 3, dadurch gekennzeichnet, dass die Breite des schallisolierenden Streifens (20) zwischen 10 und 50 % des inneren Umfangs des Rohres (10) darstellt und in zwei gleiche Teile (22, 24) unterteilt ist und dass seine Dicke höchstens gleich der der Schicht (14) aus schallisolierendem Material ist.

5. Rohr nach einem der vorangehenden Ansprüche, dadurch gekennzeichnet, dass der erste Teil (22) der Breite des schallisolierenden Streifens (20) leicht quer zurückversetzt zur entsprechenden Kante des Schlitzes (12) befestigt ist.

6. Rohr nach einem der vorangehenden Ansprüche, dadurch gekennzeichnet, dass der schallisolierende Streifen (20) aus Filz besteht, dass der Klebstoff (23, 25) vom Typ der Schmelzkleber ist und dass der abziehbare Abdeckstreifen (30) ein siliconisiertes Papier ist.

7. Verfahren zur Realisierung eines Rohres nach einem der Ansprüche 1 bis 6, dadurch gekennzeichnet, dass es darin besteht:
- zwei parallele Schichten von Klebstoff (23, 25) auf einen Abdeckstreifen (30) aufzubringen,
- den Abdeckstreifen (30) zwischen den beiden Klebstoffschichten längs in zwei Teile zu zerschneiden,
- den Abdeckstreifen (30) an einen Streifen (20) aus schallisolierendem Material heranzubringen und ihn dann daraufzukleben, wobei sich der Klebstoff hauptsächlich mit dem schallisolierenden Streifen vereinigt,
- den schallisolierenden Streifen (20) nahe an ein Rohr (10) heranzubringen, das von einem schallisolierenden Material (14) umhüllt ist und dessen Kabeleinführungsschlitz (12) geführt wird, und den ersten Teil des Abdeckstreifens abzuziehen, um einen ersten Teil des schallisolierenden Streifens (20) freizulegen, und
- den ersten Teil (22) des schallisolierenden Streifens auf eine der Kanten des Schlitzes (12) des Rohres (10) zu kleben, während der übrige Teil (24) des schallisolierenden Streifens mit seinem Abdeckstreifen (30) frei bleibt.

8. Speziell konzipierte Anlage zur Realisierung des Verfahrens nach Anspruch 7, dadurch gekennzeichnet, dass es umfasst:
- eine Gummiervorrichtung (34), die zwei parallele Klebstoffschichten (23,24) auf einen von einer ersten Trommel (32) kommenden Abdeckstreifen (30) aufbringt,
- ein Schlitzmesser (36), das den Abdeckstreifen (30) zwischen den beiden Klebstoffschichten längs in zwei Teile zerschneidet,
- eine Vorrichtung mit Führungswalzen und -rollen (35), um den Abdeckstreifen (30) an einen von einer zweiten Trommel (40) kommenden Streifen aus schallisolierendem Material heranzubringen und ihn dann daraufzukleben,
- eine Vorrichtung mit Führungswalzen und -rollen (43, 45), um den schallisolierenden Streifen (20) nahe an ein von einer dritten Trommel kommendes Rohr (10) heranzubringen, das von einem schallisolierenden Material (14) umhüllt ist, wobei eine Vorrichtung mit Scheibe (44) in den Kabeleinführungsschlitz (12) eingreift, um diesen zu führen, sowie eine Vorrichtung mit Führungsrollen (37) und Aufwickeltrommel (38), um den ersten Teil des Abdeckstreifens (30) abzuziehen und einen ersten Teil (22) des schallisolierenden Streifens (20) freizulegen,
- eine Vorrichtung mit Führungswalzen und -rollen (45), um den ersten Teil (22) des schallisolierenden Streifens auf eine der Kanten des Schlitzes (12) des Rohres (10) zu kleben, während der übrige Teil (24) des schallisolierenden Streifens mit seinem Abdeckstreifen (30) freibleibt, und
- eine Zugvorrichtung (46), die das mit seinem schallisolierenden Streifen versehene Rohr (18) herauszieht und die gleichzeitig weiter aufwärts den Abdeckstreifen (30), den schallisolierenden Streifen (20) und das Rohr (10) von ihren jeweiligen Trommeln (32, 40) zieht.

9. Anlage nach Anspruch 8, dadurch gekennzeichnet, dass sie eine Vorrichtung umfasst, um die Zugspannung bei Verlassen der ersten (32) und zweiten (40) Trommel auf einen vorbestimmten Wert einzuregeln.

## Claims

1. Ringed sheath (10) for the thermal and mechanical protection of electrical cables complemented by an external layer (14) of soundproof material and having an introduction slit (12) for cables, characterised in that it comprises a continuous longitudinal strip (20) of soundproof material of which a portion of the width (22) is fixed along one of the edges of the slit against the external layer of scundproof material and cf which the other portion (24) is capable of being fixed alcng the other edge of the slit at a later stage.

2. Sheath according to claim 1, characterised in that the first width portion (22) of the soundproof strip (20) is stuck (23) permanently along one of the edges of the slit (12) of the external layer (14) and the other portion (24) has pasting (25) covered by a detachable covering strip (30).

3. Sheath acccrding to claim 1 or 2, characterised in that the material constituting the soundproof strip (20) is the same as the material of the external layer (14) of the sheath.

4. Sheath according to claim 1, 2 or 3, characterised in that the width of the soundproof strip (20) represents between 10 and 50% of the internal periphery of the sheath (10), is divided into two equal portions (22, 24) and in that its thickness is at most equal to that of the layer (14) of soundproof material.

5. Sheath according to one cf the preceding claims, characterised in that the first portion (22) of the width of the soundproof strip (20) is fixed with a slight transverse offset relative to the corresponding edge of the slit (12).

6. Sheath according to one of the preceding claims, characterised in that the soundproof strip (20) is of felt, in that the adhesive (23, 24) is of the hot melt type, and in that the detachable covering strip (30) is a silicone-coated paper.

7. Process for producing a sheath according to one of claims 1 to 6, characterised in that it consists of :
- depositing two parallel layers of adhesive (23, 25) on a covering strip (30),
- cutting the covering strip (30) into two portions longitudinally between the two layers of adhesive,
- bringing then applying the covering strip (30) to a strip (20) of soundproof material, the adhesive mainly becoming integral with the soundproof strip,
- bringing the soundproof strip (20) close to a sheath (10) coated with a soundproof material (14) and of which the cable insertion slit (12) is guided, and peeling the first portion of the covering strip to release a first portion of soundproof strip (20), and
- applying the first portion (22) of the soundproof strip to one of the edges of the slit (12) of the sheath (10), the other portion (24) of the soundproof strip remaining free with its covering strip (30).

8. Installation specifically designed for carrying out the process according to claim 7, characterised in that it comprises:
- a pasting device (34) depositing two parallel layers of adhesive (23, 24) on a covering strip (30) issuing from a first drum (32),
- a slitting blade (36) cutting the covering strip (30) into two portions longitudinally between the two layers of adhesive,
- a device with guide rollers and wheels (35) for bringing then applying the covering strip (30) to a strip of soundproof material (20) issuing from a second drum (40),
- a device with guide rollers and wheels (43, 45) for bringing the soundproof strip (20) close to a sheath (10) coated with a soundproof material (14) issuing from a third drum, a device with a disk (44) penetrating in the cable insertion slit (12) in order to guide it, and a device with guide wheels (37) and take-up drum (38) for peeling the first portion of the covering strip (30) and releasing a first portion (22) of soundproof strip (20),
- a device with guide rollers and wheels (45) for applying the first portion (22) of the soundproof strip to one of the edges of the slit (12) of the sheath (10), the other portion (24) of the soundproof strip remaining free with its covering strip (30), and
- a traction device (46) dragging the sheath (18) equipped with its soundproof strip (20) to the outlet and therefore dragging the covering strip (30), the soundproof strip (20) and the sheath (10) upstream, from their respective drums (32, 40).

9. Installation according to claim 8, characterised in that it comprises a device for regulating the tension to a predetermined value on leaving the first drum (32) and second drum (40).
